# EUROPEAN PATENT APPLICATION

(11) **EP 4 843 853 A1**
(43) Date of publication of application: **25.11.2026**
(21) Application number: 26169362.6
(22) Date of filing: 31.03.2026
(51) Int. Cl.: B60W 30/16, B60W 60/00, B60W 40/08, B60W 50/00

(54) **VEHICLE AND METHOD FOR CONTROLLING SAME**

(30) Priority: 20.05.2025 KR 20250065026
(71) Applicant: Hyundai Motor Company, Seoul 06797 (KR); Kia Corporation, Seoul 06797 (KR)
(72) Inventor: KIM, Jong Chul, 18280 Hwaseong-si, Gyeonggi-do (KR); KIM, Su Hyun, 18280 Hwaseong-si, Gyeonggi-do (KR); KIM, Dong Sun, 18280 Hwaseong-si, Gyeonggi-do (KR); CHOI, Eun Young, 18280 Hwaseong-si, Gyeonggi-do (KR)
(74) Representative: Isarpatent

(57) **Abstract**

An autonomous vehicle control device according to one example of the present disclosure includes: a memory; and a processor electrically or adaptively connected to the memory, wherein the processor may be configured to check, when an event that requires a driver's reaction occurs during driving control of a vehicle by a system, the driver's reaction time to the event, determine a driving control state by the system to further increase a headway with a preceding vehicle when the reaction time is greater than or equal to a preset threshold value, and output the determined driving control state through an input/output interface of the vehicle.

## Description

### TECHNICAL FIELD

The present disclosure relates to a technology for preventing a driver from relying excessively on an autonomous driving system.

### BACKGROUND

The matters described in this Background section are only for enhancement of understanding of the background of the disclosure, and should not be taken as acknowledgment that they correspond to prior art already known to those skilled in the art.

Autonomous driving system may enable vehicles to detect roads and surroundings and to automatically perform various driving controls, including longitudinal and lateral controls of the vehicles.

However, as the use of autonomous driving functions may increase, drivers of the vehicles may excessively rely on the system. This excessive reliance may cause serious injuries to the drivers, as well as passengers of the vehicles, or damages to the vehicles when the functions of the system become inadvertently inoperative.

### SUMMARY

The technical task to be achieved in the present disclosure is devised to solve the above-described problem, and an object of the present disclosure is to determine a driving control state in consideration of a driver's reaction time to a specific event.

The problems to be solved in the present disclosure are not limited to the above-mentioned problems, and other problems that are not mentioned will be clearly understood by a person skilled in the art from the following description.

According to the present disclosure, an apparatus of a vehicle may comprise a processor and a memory storing at least one instruction that, when executed by the processor, is configured to cause the apparatus to determine a reaction time of a driver of the vehicle to an event that requires a reaction of the driver during autonomous driving control of the vehicle, select, based on the reaction time being greater than or equal to a threshold value, a driving control state configured to increase a distance between the vehicle and a preceding vehicle, output via an output interface of the vehicle a signal indicating the selected driving control state, and adjust, based on the selected driving control state, the autonomous driving control of the vehicle.

The event may comprise a condition in which a non-intervention time interval of the driver during the autonomous driving control exceeds a predetermined time interval, and the at least one instruction, when executed by the processor, may be configured to cause the apparatus to output, based on the condition, a driver confirmation request. The event may comprise a condition in which a duration of the autonomous driving control exceeds a preset time, and the at least one instruction, when executed by the processor, may be configured to cause the apparatus to output, based on the condition, a driver confirmation request. The event may comprise a condition in which execution of a specific function associated with the autonomous driving control is to be performed, and the at least one instruction, when executed by the processor, may be configured to cause the apparatus to output, based on the condition, a driver confirmation request.

The event may comprise a condition in which an object is within a predetermined distance from the vehicle, and a threshold value may be adjusted based on at least one of a fatigue level of the driver, a gaze direction of the driver, or a steering-wheel gripping state of the driver. The at least one instruction, when executed by the processor, may be configured to cause the apparatus to maintain, based on the reaction time being less than the threshold value, the autonomous driving control. The at least one instruction, when executed by the processor, may be configured to cause the apparatus to limit, based on the reaction time being greater than or equal to the threshold value, at least one function associated with the autonomous driving control. The limiting of the at least one function may comprise requesting driver confirmation before the at least one function is executed. The at least one instruction, when executed by the processor, may be configured to cause the apparatus to compare the reaction time with a threshold value derived from past driving data of the driver and determine, based on the comparison, the driving control state. The at least one instruction, when executed by the processor, may be configured to cause the apparatus to output, based on the reaction time being greater than or equal to the threshold value, a notification to the driver via a user interface.

According to the present disclosure, a method performed by an apparatus of a vehicle may comprise detecting, during autonomous driving control of the vehicle, occurrence of an event that requires a reaction of a driver of the vehicle, determining a reaction time of the driver to the event, selecting, based on the reaction time being greater than or equal to a threshold value, a driving control state configured to increase a distance between the vehicle and a preceding vehicle, outputting a signal indicating the selected driving control state, and adjusting, based on the selected driving control state, the autonomous driving control of the vehicle.

According to the present disclosure, a vehicle may comprise a sensor configured to detect at least one of a driver state associated with the vehicle and an event that requires a reaction of a driver of the vehicle and is associated with autonomous driving of the vehicle, and a processor circuit configured to cause the vehicle to obtain, via the sensor, event information indicating occurrence of the event and driver-state information about the driver state, estimate a reaction time of the driver to the event, compare the reaction time with a threshold value that varies based on the driver-state information, and output, based on the reaction time being greater than or equal to the threshold value, a driving control signal configured to cause at least one of increasing a distance between the vehicle and a preceding vehicle or limiting execution of at least one autonomous-driving function of the vehicle. The processor circuit may be configured to vary the threshold value based on the driver-state information, wherein the driver-state information may comprise at least one of a fatigue level of the driver, a gaze direction of the driver, or a steering-wheel gripping state of the driver. The processor circuit may be configured to output, based on the reaction time being greater than or equal to the threshold value, a request for driver confirmation before execution of the at least one autonomous-driving function. The processor circuit may be configured to determine a non-intervention time interval of the driver during autonomous driving of the vehicle and output, based on the non-intervention time interval exceeding a predetermined time interval, a driver-confirmation request.

According to the disclosed example, by adjusting the driving control state of a vehicle according to a driver's state and reaction time, excessive reliance of the driver on autonomous driving functions can be prevented.

The effects according to the disclosed example are not limited to the above-mentioned effects, and other effects that are not mentioned will be clearly understood by a person skilled in the art from the detailed description.

### BRIEF DESCRIPTION OF THE DRAWINGS

FIG. 1 shows an example of a vehicle.
FIG. 2 shows an example of an operation of determining a control state according to a driver's reaction time.
FIG. 3 shows an example of a specific operation of determining a control state according to a driver's reaction time.
FIG. 4 shows an example of a specific operation of determining a control state according to a driver's reaction time.
FIG. 5 shows an example of a specific operation of determining a control state according to a driver's reaction time.
FIG. 6 shows an example of a specific operation of determining a control state according to a driver's reaction time.
FIG. 7 and FIG. 8 show exemplary diagrams of vehicle operation according to a control state.
FIG. 9 shows an example computing system.

### DETAILED DESCRIPTION

Hereinafter, preferred examples of the present disclosure will be described in detail with reference to the accompanying drawings.

However, the technical idea of the present disclosure is not limited to some examples to be described but may be implemented in various different forms, and within the scope of the technical idea of the present disclosure, one or more of the constituent elements may be selectively combined or substituted between examples.

In addition, the terms (including technical and scientific terms) used in the examples of the present disclosure may be interpreted as having a meaning that can be generally understood by a person with ordinary skill in the art to which the present disclosure pertains, unless explicitly defined and described otherwise, and commonly used terms such as those defined in a dictionary may be interpreted in consideration of the contextual meaning of the related technology.

Furthermore, the terms used in the examples of the present disclosure are for the purpose of describing the examples and are not intended to limit the content of the present disclosure.

For purposes of this application and the claims, using the exemplary phrase "at least one of: A; B; or C" or "at least one of A, B, or C," the phrase means "at least one A, or at least one B, or at least one C, or any combination of at least one A, at least one B, and at least one C. Further, exemplary phrases, such as "A, B, or C", "at least one of A, B, and C", "at least one of A, B, or C", etc. as used herein may mean each listed item or all combinations of the listed items. For example, "at least one of A or B" may refer to (1) at least one A; (2) at least one B; or (3) at least one A and at least one B.

In describing the components of the examples of the present disclosure, terms such as first, second, A, B, (a), (b), etc., may be used. These terms are only for distinguishing one component from another, and the essence, order, or sequence of the corresponding component is not limited by these terms.

When a component is described as being 'connected,' 'coupled,' or 'joined' to another component, it may include not only cases where the component is directly connected, coupled, or joined to the other component, but also cases where it is 'connected,' 'coupled,' or 'joined' through another component between them.

Furthermore, when described as being formed or placed "on" or "below" each component, "on" or "below" includes not only cases where the two components are in direct contact but also cases where one or more other components are formed or placed between them. Also, when expressed as "on" or "below," it may include the meaning of not only an upward direction but also a downward direction based on one component.

In the various flowcharts of this document, at least some of the steps may be omitted or their mutual order may be changed, and at least some of the various examples of this document may be performed at a specific point in time of the flowchart steps. The operations of the various flowcharts in this document may be performed by at least one of the control device 100, the processor 130, and the vehicle 10. In addition, redundant content in the drawings of this document may be omitted.

In this document, 'autonomous driving system' or 'driver control assistance system' refers to hardware and software that can assist a driver in continuously controlling the longitudinal and lateral movements of a vehicle. Such a driver control assistance system may be referred to as a 'system' in this document.

In this document, 'Feature' may refer to a specific function of the system that aids the driver in a defined traffic scenario, situation, and within system boundaries.

In this document, 'Dynamic Control' may refer to performing the operational and tactical functions necessary to move the vehicle in real-time. This may include control of the vehicle's lateral and longitudinal movements, monitoring of the road environment, responding to events in the road traffic environment, operational planning, and signaling.

In this document, 'System Boundaries' may refer to verifiable or measurable limits or conditions set by the manufacturer, up to or within the scope of conditions that affect the system or the functions of the system designed to provide assistance to the driver and the ability of the system to operate as intended.

The term "module" or "unit" used in the specification means a software and/or hardware component, and the "module" or "unit" performs certain operations/functions/roles. However, the "module" or "unit" is not construed as being limited to software or hardware. The "module" or "unit" may be configured to be in an addressable storage medium or to execute one or more processors. Therefore, as an example, the "module" or "unit" may include at least one of components such as software components, object-oriented software components, class components, and task components, processes, functions, attributes, procedures, sub-routines, segments of program codes, drivers, firmware, micro-codes, circuits, data, databases, data structures, tables, arrays, or variables. Functions provided in the components, "modules", or "units" may be combined into a smaller number of components, "modules", or "units" or further divided into additional components, "modules", or "units".

In the present disclosure, the "module" or "unit" may be realized as a processor and a memory. The "processor" should be widely construed to include a general-purpose processor, a central processing unit (CPU), a microprocessor, a digital signal processor (DSP), a microcontroller, a state machine, or the like. In some environments, the "processor" may refer to an application-specific integrated circuit (ASIC), a programmable logic device (PLD), or a field-programmable gate array (FPGA), and the like. For example, the "processor" may refer to a combination of processing devices such as a combination of a DSP and a microprocessor, a combination of a plurality of microprocessors, a combination of one or more microprocessors combined with a DSP core, or any other such combination. Moreover, the "memory" should be widely construed to include any electronic component capable of storing electronic information. The "memory" may refer to various types of processor-readable medium such as a random access memory (RAM), a read only memory (ROM), a non-volatile random access memory (NVRAM), a programmable read only memory (PROM), an erasable programmable read only memory (EPROM), an electrically erasable programmable read only memory (EEPROM), a flash memory, a magnetic or optical data storage device, and registers. When the processor can read information from a memory and/or record the information in the memory, the memory may be in a state of electronic communication with a processor. Memory integrated into a processor is in a state of electronic communication with the processor.

The one or more features described herein may be provided as a computer program stored in a computer-readable recording medium to be executed on a computer. The medium may either continuously store a computer-executable program or temporarily store the program for execution or download. Furthermore, the medium may be a variety of recording or storage means in the form of a single hardware device or multiple combined hardware devices and is not limited to media directly connected to some computer system but may also be distributed across a network. Examples of such media include magnetic media such as a hard disk, a floppy disk, or a magnetic tape, optical recording media such as a CD-ROM or a DVD, magneto-optical media such as a floptical disk, and a ROM, RAM, or flash memory, among others, configured to store program instructions. Additional examples of such media include media or storage media that are managed by an app store that distributes applications or by various other sites or servers that provide or distribute software.

In a hardware implementation, processing units used for performing the techniques may be implemented within one or more ASICs, DSPs, digital signal processing devices, programmable logic devices, field-programmable gate arrays, processors, controllers, microcontrollers, microprocessors, electronic devices, or computers or combinations thereof designed to perform the functions described in the present disclosure.

An automation level of an autonomous driving vehicle may be classified as follows, according to the American Society of Automotive Engineers (SAE). At autonomous driving level 0, the SAE classification standard may correspond to "no automation," in which an autonomous driving system is temporarily involved in emergency situations (e.g., automatic emergency braking) and/or provides warnings only (e.g., blind spot warning, lane departure warning, etc.), and a driver is expected to operate the vehicle. At autonomous driving level 1, the SAE classification standard may correspond to "driver assistance," in which the system performs some driving functions (e.g., steering, acceleration, brake, lane centering, adaptive cruise control, etc.) while the driver operates the vehicle in a normal operation section, and the driver is expected to determine an operation state and/or timing of the system, perform other driving functions, and cope with (e.g., resolve) emergency situations. At autonomous driving level 2, the SAE classification standard may correspond to "partial automation," in which the system performs steering, acceleration, and/or braking under the supervision of the driver, and the driver is expected to determine an operation state and/or timing of the system, perform other driving functions, and cope with (e.g., resolve) emergency situations. At autonomous driving level 3, the SAE classification standard may correspond to "conditional automation," in which the system drives the vehicle (e.g., performs driving functions such as steering, acceleration, and/or braking) under limited conditions but transfer driving control to the driver when the required conditions are not met, and the driver is expected to determine an operation state and/or timing of the system, and take over control in emergency situations but do not otherwise operate the vehicle (e.g., steer, accelerate, and/or brake). At autonomous driving level 4, the SAE classification standard may correspond to "high automation," in which the system performs all driving functions, and the driver is expected to take control of the vehicle only in emergency situations. At autonomous driving level 5, the SAE classification standard may correspond to "full automation," in which the system performs full driving functions without any aid from the driver including in emergency situations, and the driver is not expected to perform any driving functions other than determining the operating state of the system. Although the present disclosure may apply the SAE classification standard for autonomous driving classification, other classification methods and/or algorithms may be used in one or more configurations described herein.

One or more features associated with autonomous driving control may be activated or adjusted based on a feature of adaptive autonomous-driving control using driver responsiveness. For example, when the driver's reaction time exceeds a threshold, the system may lower the autonomous-driving level, tighten braking-time control, advance forward-collision warning timing, or restrict acceleration changes to more conservative rates. Conversely, when the driver consistently responds within the threshold, the system may maintain standard autonomous-driving settings without additional limitations.

One or more auxiliary devices (e.g., engine brake, exhaust brake, hydraulic retarder, electric retarder, regenerative brake, etc.) may also be controlled based on a feature of adaptive autonomous-driving control using driver responsiveness. For example, when the driver's reaction time exceeds a threshold, the system may increase the use of an engine brake or retarder to provide smoother deceleration, apply regenerative braking earlier to extend stopping distance, or limit aggressive auxiliary-braking profiles for safety. Conversely, when the driver consistently responds within the threshold, normal auxiliary-braking settings may be maintained without modification. One or more communication devices (e.g., a modem, a network adapter, a radio transceiver, or an antenna capable of Ethernet, Wi-Fi, NFC, Bluetooth, LTE, 5G NR, or V2X communication) may also be controlled based on a feature of adaptive autonomous-driving control using driver responsiveness. For example, when the driver's reaction time exceeds a threshold, the system may increase V2X message transmission frequency to surrounding vehicles or infrastructure, request cloud-based hazard assessments more often, or activate a higher-reliability communication mode. Conversely, when the driver consistently responds within the threshold, standard communication intervals and modes may be maintained.

Minimum risk maneuver (MRM) operation(s) may also be controlled based on a feature of adaptive autonomous-driving control using driver responsiveness. For example, when the driver repeatedly fails to respond to confirmation requests or when the measured reaction time exceeds a threshold, the system may initiate an MRM by gradually decelerating the vehicle, increasing following distance, or guiding the vehicle toward a safe stop on the shoulder or in the lane with hazard lights activated. Conversely, when the driver responds within the threshold, MRM activation may be deferred, and normal autonomous driving may continue without triggering the minimal risk stop sequence.

Biased driving operation(s) may also be controlled based on a feature of adaptive autonomous-driving control using driver responsiveness. For example, when the driver's reaction time becomes greater than or equal to a threshold, the driving control apparatus may increase a biased lateral offset to provide a wider safety buffer from adjacent vehicles or roadside objects during lane keeping or lane changes. Conversely, when the driver consistently responds within the threshold, the system may maintain a nominal lateral position without applying an increased bias. Additionally, in slow-response conditions, the system may dynamically widen the lateral clearance during lane changes to reduce risk, whereas in normal-response conditions it may use a standard or narrower offset.

One or more sensors (e.g., IMU sensors, camera, LIDAR, RADAR, blind-spot monitoring sensors, parking sensors, and the like) may also be controlled based on a feature of adaptive autonomous-driving control using driver responsiveness. For example, when the driver's reaction time becomes greater than or equal to a threshold, the system may increase the sampling rate of a forward camera or RADAR for safer following, activate a wider-range LIDAR scan for enhanced object detection, or trigger more frequent driver-monitoring camera checks. Conversely, when the driver consistently responds within the threshold, the system may maintain nominal sensor operation without increasing sensing frequency or range.

An autonomous driving level and/or autonomous driving activation/deactivation may be controlled based on a feature of adaptive autonomous-driving control using driver responsiveness. For example, when a driver's reaction time to required prompts (e.g., a confirmation request for lane change, speed adjustment, or obstacle-avoidance notification) becomes greater than or equal to a threshold, the system may automatically shift to a more conservative autonomous-driving level, increase following distance, or require more frequent driver attentiveness actions (e.g., placing hands on the wheel or looking forward within a threshold interval). Conversely, when the driver consistently responds within the threshold, the system may maintain or restore a higher autonomous-driving level without additional limitations.

According to the present disclosure, a vehicle control approach is provided that addresses excessive driver reliance on autonomous driving functions by dynamically adjusting the driving control state based on the driver's reaction time. When an event occurs that requires a driver response, the control device checks the driver's reaction time and compares it with a threshold that may vary according to the driver's condition, accumulated driving behavior, and the driving environment. When the reaction time is greater than or equal to the threshold, the control device may limit at least some autonomous driving functions, require explicit driver confirmation before executing specific operations, or conservatively modify driving behavior such as increasing headway with a preceding vehicle. The threshold itself may be adapted using factors such as driver fatigue, gaze direction, steering-wheel engagement, and past reaction patterns learned through accumulated data. By determining and outputting a control state that reflects the driver's responsiveness, the present disclosure enables safer operation of autonomous driving systems while encouraging continued driver engagement.

Hereinafter, examples will be described in detail with reference to the accompanying drawings, wherein like or corresponding components are given the same reference numerals regardless of the drawing numbers, and redundant descriptions thereof will be omitted.

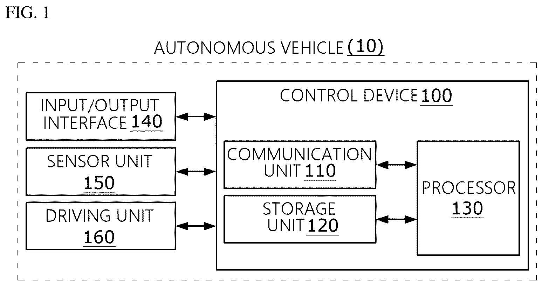

FIG. 1 is a configuration diagram of a vehicle 10 according to one example.

The vehicle 10 may include a control device 100, a communication unit 110, a memory 120, a processor 130, an input/output interface 140, a sensor unit 150, and a driving unit 160. Each of these components in FIG. 1 may be implemented inside the vehicle.

The control device 100 may be formed integrally with the internal components of the vehicle, or it may be implemented as a separate, independent device from other internal components of the vehicle 10 and communicate with the internal vehicle components through various connection means (e.g., CAN bus, LIN bus, Ethernet, wireless network, or wired connection, etc.). The control device 100 includes the communication unit 110, the memory 120, and the processor 130 to control the vehicle, and may additionally include other components such as the input/output interface 140, the sensor unit 150, and the driving unit 160 to perform complex control functions according to the driving situation (e.g., highway driving, urban driving, or parking automation, etc.). In the present disclosure, the control device 100 may also be referred to as an autonomous vehicle control device 100.

The communication unit 110 may communicate with other control devices inside the vehicle to share data between systems or transmit and receive various information through a connection with the outside of the vehicle. The communication unit 110 uses various in-vehicle communication methods such as CAN communication and Ethernet to transmit control signals and data between internal components, and it can link driving information and external data in real-time through communication with a user terminal, other vehicles (V2V: Vehicle-to-Vehicle), infrastructure (V2I: Vehicle-to-Infrastructure), or an external server (e.g., cloud server, traffic management server, or map update server, etc.).

The communication unit 110 may perform functions for short-range communication, GPS signal reception, V2X (Vehicle-to-Everything) communication, optical communication, broadcast transmission/reception, and ITS (Intelligent Transport Systems) communication. It may also support stable data transmission at close range using wireless communication technologies such as Bluetooth, RFID (Radio Frequency Identification), IrDA (Infrared Data Association), UWB (Ultra-Wideband), ZigBee, NFC (Near Field Communication), Wi-Fi, Wi-Fi Direct, and Wireless USB. Furthermore, the communication unit 110 may include a mobile communication module based on a mobile communication network (LTE, 5G, 6G, etc.) and a wireless internet module for wireless internet access to receive real-time data through long-distance communication and improve the performance of the autonomous driving system by linking with the cloud.

The memory 120 may include various forms of memory capable of storing data and may be integrated within the control device 100 or the processor 130 or configured as a separate module. The memory 120 may include non-volatile memory (e.g., SSD, hard disk drive, flash memory, or MRAM, etc.) and volatile memory (e.g., DRAM or SRAM, etc.), and these can be combined to implement a memory system of various capacities and performance levels.

The memory 120 may store instructions that can drive various examples of the present disclosure. When executed by the processor 130, these instructions may be configured to detect an event that requires a driver's reaction during driving control of the vehicle by the system, check the driver's reaction time to the event, and determine the driving control state based on the reaction time (e.g., selecting a conservative mode, enabling a confirmation-required mode, or increasing a following-distance parameter, etc.).

According to one example, the memory 120 may store the driver's reaction time data, threshold value information related to the driving control state, and event type and corresponding setting data (e.g., lane-change request events, cut-in detection events, or sudden braking events, etc.).

In addition, the memory 120 may store programs and data that control the operation of the autonomous driving system.

The processor 130 communicates with the communication unit 110, the memory 120, the input/output interface 140, the sensor unit 150, the driving unit 160, and various internal components of the vehicle 10 through electrical or operational connections and controls the operation of each component and performs data processing. The processor 130, as a central processing unit for executing instructions and calculating data, can collect, process, and analyze data in real-time according to the vehicle's driving environment (e.g., traffic congestion, road curvature, or weather changes, etc.) to perform vehicle control.

The processor 130 may be implemented in the form of hardware, software, or a combination thereof, and may perform vehicle control logic in forms such as a microcontroller, FPGA, or ASIC. It may also include a multi-processor configuration to control complex autonomous driving and driver assistance systems (e.g., L2-L4 autonomous driving, adaptive cruise control, or lane-change automation, etc.). Such a processor configuration can support comprehensive vehicle control and stable performance through the execution of autonomous driving and assistance systems, sensor data processing, communication data management, and driving-related judgment functions.

The input/output interface 140 receives input related to vehicle control from the user and delivers information about the vehicle's control state and system operation to the user.

The input/output interface 140 may perform the function of receiving various inputs from the user and delivering the vehicle control state to the user. The input/output interface 140 may include input means and output means.

The input means may include physical buttons, selection areas on a touch display, voice recognition functions, gesture recognition functions, (e.g., hand-raise gestures, swipe gestures, or wheel-tap gestures, etc.), through which the user can input commands such as autonomous driving system activation requests, function switching, or driving assistance settings.

The output means includes a display, an audio module (e.g., speaker), a haptic module, etc., and may provide the user with the status of the autonomous driving system, control transition request notifications, function activation status, etc., in visual, audible, and tactile forms (e.g., dashboard display alerts, acoustic tones, or steering-wheel vibration patterns, etc.).

In addition, the input/output interface 140 may receive the driver's input through a touchscreen, physical buttons such as switches, a voice recognition system, etc. Through this, the driver can transmit commands such as activating autonomous driving functions, changing warning settings, and dismissing warnings to the vehicle system.

The sensor unit 150 may include a number of sensors that support the stable operation of the autonomous driving system or driver assistance system by detecting various driving and environmental information in real-time. The sensor unit 150 may measure the distance and speed to surrounding objects through long-range detection sensors such as RADAR (Radio Detection and Ranging) and LIDAR (Light Detection and Ranging), and may include ultrasonic sensors to detect objects near the vehicle 10 (e.g., curb edges, pedestrians, or parking obstacles, etc.).

The sensor unit 150 may include a camera. The camera may be classified into an external camera and an internal camera. The external camera recognizes the road and surrounding environment, and the internal camera can comprehensively grasp the situation inside and outside the vehicle by detecting the driver's state (e.g., gaze tracking, steering wheel grip state, etc.) or the indoor situation (e.g., gaze direction, head posture, or eyelid movement, etc.). The sensor unit 150 may include a heart rate sensor, a pressure sensor, an infrared sensor, etc., to collect the driver's biometric information or various environmental data (e.g., cabin temperature, light level, or CO₂ concentration, etc.).

The driving unit 160 may include various components that provide the driving force necessary for the driving of the vehicle 10 and control the vehicle's operation according to commands output from the control device 100. The driving unit 160 may be composed of devices that generate and transmit the vehicle's power, such as an engine, motor, transmission, and wheel drive system, and controllers that control them. Through these components, acceleration, deceleration, and direction changes of the vehicle 10 can be performed (e.g., lane keeping, lane changing, or precision parking maneuvers, etc.).

The driving unit 160 is controlled to perform longitudinal control (acceleration and deceleration) and lateral control (lane keeping and changing) of the vehicle to maintain driving safety. For example, it receives commands from the control device 100 to adjust the motor's output or the wheels' rotation speed and direction so that the vehicle can follow the driving path.

In addition, the driving unit 160 includes a brake system to reduce the vehicle's speed or stop it during driving. In the case of an electric vehicle, the driving unit 160 can control the vehicle 10 through an electric motor, and in the case of an internal combustion engine vehicle, it can control the vehicle 10 based on engine output.

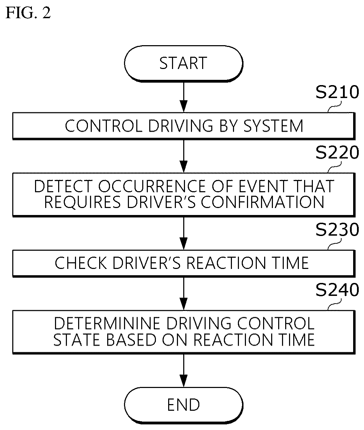

FIG. 2 is a flowchart illustrating an operation for determining a control state according to a driver's reaction time according to one example.

The control device 100 may perform driving control of the vehicle 10 by the system (S210).

For example, the control device 100 may execute longitudinal/lateral control of the vehicle 10, headway maintenance, lane keeping assistance, and other autonomous driving related functions (e.g., adaptive cruise control, automated lane change assistance, or highway merge control, etc.).

Next, the control device 100 may detect the occurrence of an event that requires a reaction of the driver (S220).

Various types of events that require a driver's response may occur depending on the vehicle driving environment or conditions, and they may include, for example, cut-in of a surrounding vehicle, a request to activate a function of a system, a state in which a specific driving time is exceeded, a situation in which an object approaches within a predetermined distance, and the like (e.g., sudden braking of a forward vehicle, road-hazard detection, or sensor abnormality alerts, etc.). In addition, the event may be a concept that also incorporates an operation of outputting a driver's confirmation request upon occurrence of various types of events as described above.

Next, the control device 100 may check the reaction time of the driver (S230).

When an event that requires a reaction of the driver occurs, the control device 100 may check the deriver's reaction time to the event.

For example, the control device 100 may check the time taken for the driver to recognize an event and perform an operation (e.g., clicking a confirmation button, manipulating the steering wheel, using a braking/accelerating pedal, or performing a voice command, etc.).

Next, the control device 100 may determine the driving control state based on the reaction time (S240).

For example, when the driver's reaction time is less than a preset threshold value, the control device 100 may maintain driving control according to an existing system setting or perform additional functions according to autonomous driving without any limitation (e.g., lane keeping operation, headway control, or automated steering assistance, etc.).

Alternatively, when the driver's reaction time is greater than or equal to the threshold value, the control device 100 may limit the driving control by the system.

According to various examples, the limitation of the driving control may include limiting at least some of the functions of the driving control. For example, the control device 100 may limit activation of certain advanced functions such as automatic lane change and emergency braking, or maintain these functions in an inactive state unless the driver directly accepts them (e.g., by pressing an on-screen confirmation, pulling a steering-wheel paddle, or performing a dedicated gesture, etc.).

In addition, the limitation of the driving control may include requesting the driver's confirmation when a specific function during the driving control is activated. For example, before the lane change function is activated, the control device 100 may request an explicit approval from the driver through a display notification, voice guidance, or a button on the interface. When the driver does not confirm this, the control device 100 may enhance safety by blocking activation of the function.

In addition, when the reaction time is greater than or equal to a threshold value, the control device 100 may conservatively change the driving control of the vehicle 10. For example, the control device 100 may be configured to perform at least one of increasing a headway with a preceding vehicle or securing a longer time interval with a preceding vehicle (e.g., extending a time-gap parameter, increasing desired following distance, or delaying lane-change execution, etc.). For example, the control device 100 may increase the headway or set a specific function (e.g., lane change) to be performed after confirmation by the driver.

The control device 100 may output the determined driving control state through the input/output interface 140 of the vehicle 10.

Specifically, the determined driving control state may be visually displayed on a display panel of the vehicle or may be communicated to the driver in at least one of a voice guidance through a speaker, or a tactile notification such as steering wheel or seat vibration.

For example, an icon, a graphic, a text message, or the like indicating that the driving control state has been changed to a more passive (conservative) state may be displayed through the display of the vehicle 10. For example, the control device 100 may output a user interface (UI) screen indicating that the headway between the vehicle 10 and the forward vehicle is extended (e.g., displaying an increased time-gap indicator or headway-extension icon, etc.).

In addition, through the speaker, a voice notification such as "The driver's reaction is slow, so the driving setting has been changed." may be output, or a tactile warning may be provided through a vibration module of the steering wheel or the seat to clearly convey the changed state to the driver (e.g., brief haptic pulses, patterned vibration alerts, or rhythmic seat vibration, etc.).

In this way, the driver may immediately check the changed driving control state and respond appropriately when necessary.

In addition, when the reaction time is greater than or equal to a threshold value, the control device 100 may output a notification through the input/output interface 140. For example, when the reaction time is greater than or equal to a threshold value, the control device 100 may output the notification through at least one of a visual notification (e.g., a display screen, , flashing indicator, etc.), an audible notification (e. g., a warning sound through a speaker), and a tactile notification (e. e., vibration of the steering wheel). This makes it possible for the driver to recognize the situation and to make an appropriate response.

According to various examples, the control device 100 may vary a threshold value for comparing reaction time based on at least one of a driver state and a driving situation.

For example, the control device 100 may adjust the threshold value based on at least one of driver state information such as driver fatigue, attention concentration, gaze direction, and steering wheel gripping state, and driving situation information such as vehicle speed, traffic congestion, and road environment (highway, general road, or tunnel section, etc.).

Specifically, when it is determined that the driver's fatigue level of is high or the attention concentration level is low, or when the vehicle is traveling at a high speed, the risk due to the driver's reaction delay may increase, so that the control device 100 may set the threshold value to a stricter (i.e., shorter) value. In contrast, when the driver's attention concentration is high, or in a road environment in which the speed of the vehicle is low, or the traffic congestion is low, the threshold value may be configured to be relaxed.

For example, the driver's state may include factors such as fatigue, attention concentration level, and the like. To this end, the control device 100 may analyze data such as the blinking frequency, the eyelid opening/closing speed of, and the gaze fixing time through the sensor unit 150 to determine the driver's fatigue level or drowsiness state (e.g., micro-sleep detection, eye-closure ratio computation, or head-pose drift analysis, etc.). The control device 100 may calculate a score for fatigue level based on the above-described data.

When the confirmed driver state corresponds to a preset state (e.g., when the calculated fatigue level is greater than or equal to a predetermined value), the control device 100 may determine the driving control state of the vehicle 10 by applying a weight to the driver's reaction time.

For example, since the time during which the driver recognizes an event and reacts is likely to be delayed in a state of high fatigue, the control device 100 may correct and evaluate the reaction time or set a more conservative threshold value. In contrast, when the fatigue level is low and the attention concentration state is good, the control device 100 may maintain the existing threshold value or permit the driving control more flexibly.

According to various examples, the control device 100 may apply different threshold values for comparing reaction times for each driver.

Specifically, the control device 100 may calculate a threshold value for comparing the response time for each driver by using the driver's accumulated driving data of and the deep learning-based learning method.

For example, the driving data of a specific driver may include data such as a road shape, surrounding vehicle information (e.g., position, speed, or acceleration, etc.), type of output warning (e.g., visual, auditory, tactile), the driver's gaze , a position of the driver's hand, or the driver's operation (e.g., acceleration, deceleration, gear shifting, steering, switch manipulation, user setting mode (USM), or navigation menu, etc.).

In addition, the driving data may include the time when the driver previously observed an in-vehicle warning sound while driving, the response time to a sound (horn), movement, turn signal blinking, and brake light of a surrounding vehicle (e.g., sudden brake light activation, hazard light activation, or lane-change signal detection, etc.), and the like.

The control device 100 may calculate a threshold value for each driver using various input values and weights based on the driving data. Accordingly, the control device 100 may implement safer and more adaptive driving control by setting the reaction time reference optimized for the driver's state and the driving environment.

In addition, the control device 100 may learn the response pattern of the driver based on the past data and continuously update the personalized threshold value, thereby enabling dynamic control in accordance with the driver's characteristics and the situation change.

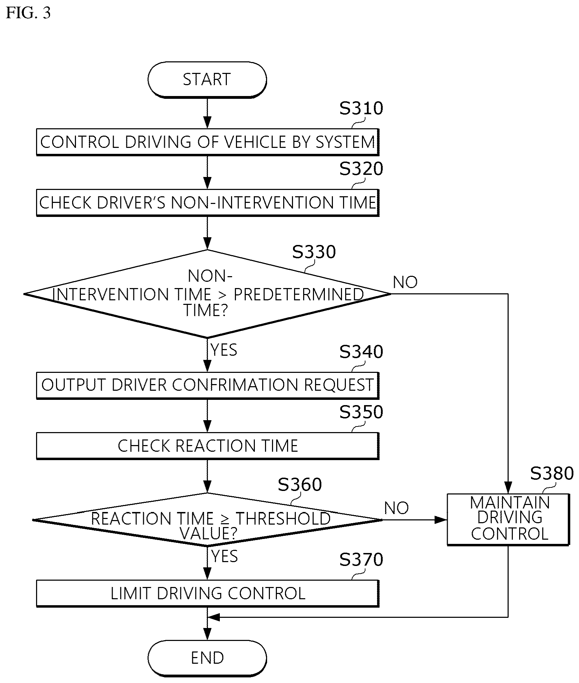

FIG. 3 shows an example of a specific operation of determining a control state according to a driver's reaction time according to one example. FIG. 3 illustrates an example event requiring driver confirmation, which is related to the duration of the driver's non-intervention in the autonomous driving control.

According to one example, the event that requires the driver's confirmation may include an event in which the driving control time of the vehicle 10 exceeds a preset time (e.g., continuous autonomous driving for 10 minutes, 20 minutes, or 30 minutes, etc.) and a driver confirmation request is output.

While the control device 100 performs the driving control by the system (S310), the control device 100 may check the driver's non-intervention time (S320).

The driver's non-intervention time may include, for example, a continuous time during driving control of the vehicle 10 during which the driver does not physically operate the steering device, the accelerator pedal, the braking pedal, or the like (e.g., no steering torque input, no pedal movement, or no manual override button use, etc.). In addition, the driver's non-intervention time may include a time in which the eye-on state of looking forward is not confirmed for a predetermined time or longer (e.g., gaze diverted to a phone, dashboard, or center display, etc.).

This non-intervention time may be measured via sensors and input/output interfaces inside the vehicle, through which it may be indirectly assessed whether the driver is paying sufficient attention to the driving situation. For example, when the time when the driver does not hold the steering wheel exceeds a predetermined time, or when the vehicle is traveling for a predetermined time or longer without stepping on the acceleration/braking pedal, the control device 100 may determine the state as the driver's non-intervention time (e.g., >10 seconds, >15 seconds, or >20 seconds, etc.).

In addition, the driver's non-intervention time may be measured in more detail, including the time when the driver is looking at the road ahead through a gaze tracking sensor, an internal camera, or the like (e.g., IR-based eye tracker, cabin-facing camera, or facial-pose sensor, etc.).

Next, the control device 100 may determine whether the driver's non-intervention time exceeds a predetermined time (S330).

When the driver's non-intervention time exceeds a predetermined time (S330: YES), the control device 100 may output a driver confirmation request (S340).

For example, the control device 100 may display a warning message or a visual notification through the display panel or may generate an acoustic warning to notify the driver of the non-intervention state (e.g., flashing HUD icon, warning chime, or pop-up message, etc.). Further, physical feedback may be provided using a vibrating motor of the steering wheel or seat that generates vibrations to make the driver recognize the non-intervention state (e.g., brief wheel vibration, patterned seat vibration, or dual-pulse alert, etc.).

The driver confirmation request may require explicit driver input, not just a level of calling attention. For example, the control device 100 may require the driver to confirm the request through a specific interface input such as a button click on a touchscreen, a response through a voice command, or a steering wheel operation (e.g., double-tap on wheel, "Yes" voice response, or pedal press, etc.).

In contrast, when the driver's non-intervention time does not exceed the predetermined time (S330: NO), the control device 100 may maintain the current driving control state (S380).

Next, the control device 100 may check the reaction time of the driver with respect to the output driver confirmation request (S350).

Specifically, the control device 100 may measure the time taken for the driver to respond to the request and may utilize various input data for this purpose (e.g., input timestamps, sensor signals, or button-interaction logs, etc.).

For example, as an example of confirming a reaction time for a visual warning, the control device 100 may output a message or a warning to the display or the head-up display (HUD) and measure the time until a user input for the output content is received (e.g., button tap, screen touch, or voice acknowledgment, etc.).

In addition, as an example of the response time confirmation for an audible warning, the control device 100 may measure the time taken for the driver to respond to the output sound signal (e.g., horn-like beep, spoken alert, or tone burst, etc.).

In addition, as an example of the confirmation of the reaction time to a physical feedback, the control device 100 may measure the time taken for the driver to respond to the vibration of the steering wheel, the vibration of the seat, or the like by the steering wheel operation or the pedal operation (e.g., steering nudge, pedal tap, or button press, etc.).

Next, the control device 100 may check whether the measured reaction time is greater than or equal to a preset threshold value (S360).

When the measured reaction time is greater than or equal to a preset threshold value (S360: YES), the control device 100 may limit the driving control by the system (S370).

In this case, the control device 100 may limit at least some of the functions of the driving control according to a preset policy or a user selection or may request driver confirmation for activation of a specific function (e.g., lane change approval, auto-overtake approval, or auto-merge approval, etc.).

In contrast, when the measured reaction time is less than the preset threshold value (S360: NO), the control device 100 may maintain the existing driving control (S380).

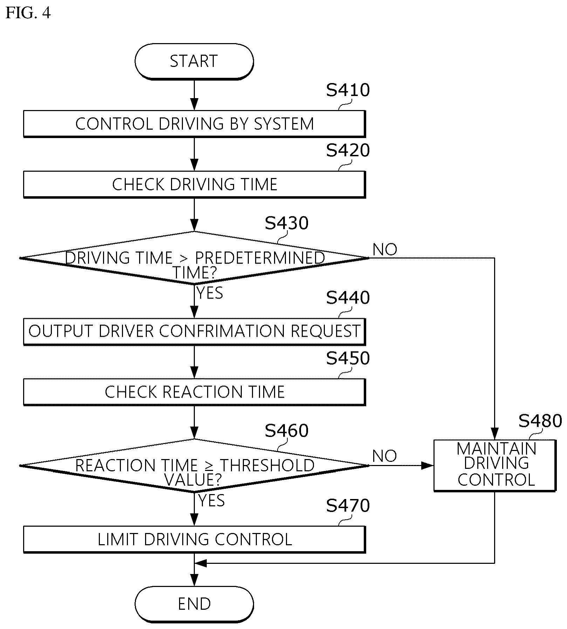

FIG. 4 shows an example of a specific operation of determining a control state according to a driver's reaction time according to one example. In FIG. 4, as an event that requires the driver's confirmation, content related to the driving control time of the vehicle 10 by the autonomous driving system is disclosed.

According to one example, the event that requires the driver's confirmation may include an event in which the driving control time of the vehicle 10 exceeds a preset time (e.g., an accumulated autonomous driving duration exceeding 5 minutes, 10 minutes, or another predetermined interval, etc.) and a driver confirmation request is output.

While performing the driving control by the system (S410), the control device 100 may check the driving time of the vehicle 10 controlled by the autonomous driving system (S420).

Specifically, the control device 100 may check the accumulated driving time in a state in which the autonomous driving system of the vehicle 10 is activated. For example, the control device 100 may record the elapsed time from the time when the vehicle is switched to the autonomous driving mode to the present or may accumulate and check the total time when the autonomous driving function is activated under a specific condition (e.g., a certain speed or higher, a lane keeping function activation state, or adaptive cruise enabled, etc.).

Next, the control device 100 may check whether the checked driving time exceeds a preset time (S430).

When the driving time does not exceed the preset time (S430: NO), the control device 100 may maintain the current driving control state (S480).

In contrast, when the driving time exceeds the preset time (S430: YES), the control device 100 may output a driver confirmation request (S440).

Next, the control device 100 may check the driver's reaction time to the output driver confirmation request (S450). In addition, the control device 100 may check whether the measured reaction time is greater than or equal to a preset threshold value (S460).

When the measured reaction time is greater than or equal to a preset threshold value (S460: YES), the control device 100 may limit the driving control by the system (S470). In contrast, when the measured reaction time is less than the preset threshold value (S460: NO), the control device 100 may maintain the existing driving control (S480).

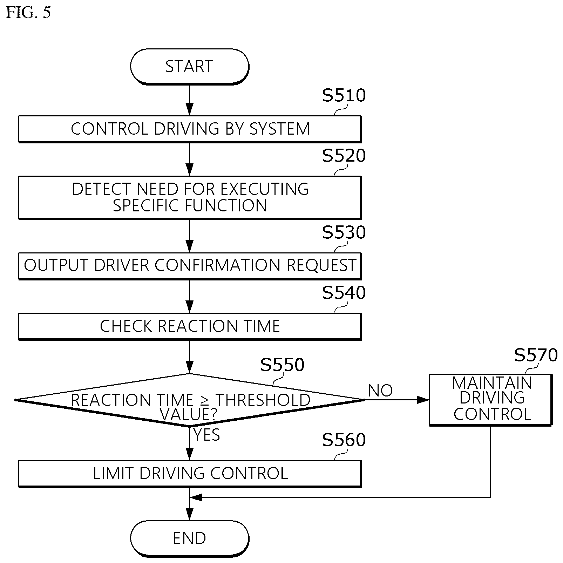

FIG. 5 shows an example of a specific operation of determining a control state according to a driver's reaction time according to one example. In FIG. 5, as an event that requires the driver's confirmation, content related to the execution of a specific function among the autonomous driving functions is disclosed.

According to one example, the event that requires the driver's confirmation may include an event in which execution of a specific function in the driving control is required (e.g., lane change initiation, automatic merging, or emergency braking preparation, etc.) and a driver confirmation request is output.

When the control device 100 detects a need to execute a specific function while performing the driving control by the system (S510), the control device 100 may output a driver confirmation request (S530) (e.g., via display prompt, voice message, or haptic alert, etc.).

Specifically, the control device 100 may output various types of confirmation requests to explicitly inform the driver when it is determined that execution of a specific function is essential for safe driving of the vehicle 10 or proper operation of the system (e.g., evasive lane change, rapid deceleration, or automatic merge maneuver, etc.).

For example, when it is necessary to execute a function such as a lane change function, a driving speed adjustment function, an emergency braking system activation, or the like, the control device 100 may output a confirmation request (e.g., a message) to the driver before activating the function (e.g., pop-up alert, voice instruction, or steering-wheel vibration cue, etc.).

The driver confirmation request may be responded to through various input devices, for example, the driver may respond to the request through a confirmation button on a touchscreen, a voice command, a steering wheel operation, or the like (e.g., wheel-tap gesture, pedal tap, or "confirm" voice input, etc.).

The control device 100 may check the driver's reaction time to the output driver confirmation request (S540). In addition, the control device 100 may check whether the measured reaction time is greater than or equal to a preset threshold value (S550).

When the measured reaction time is greater than or equal to a preset threshold value (S550: YES), the control device 100 may limit the driving control by the system (S560). In contrast, when the measured reaction time is less than the preset threshold value (S550: NO), the control device 100 may maintain the existing driving control (S570).

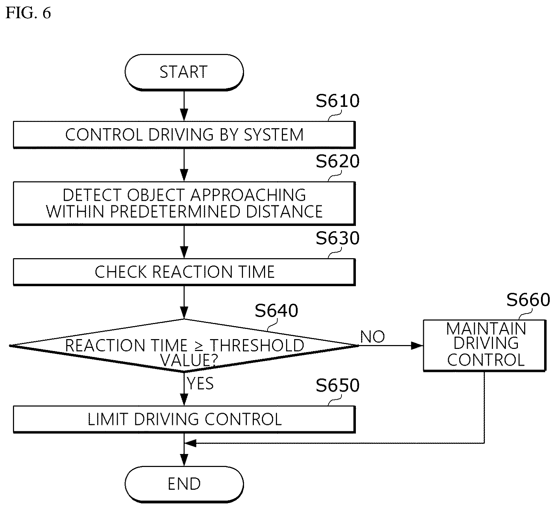

FIG. 6 shows an example of a specific operation of determining a control state according to a driver's reaction time according to one example. In FIG. 6, as an event that requires the driver's confirmation, content related to an object approaching within a predetermined distance is disclosed.

According to one example, an event that requires the driver's confirmation may include an event in which an object is close to the vehicle within a predetermined distance (e.g., a vehicle cutting in, a pedestrian entering the roadway, or a roadside object detected near the lane boundary, etc.).

While performing the driving control by the system (S610), the control device 100 may detect that an object approaches the vehicle 10 within a predetermined distance (S620).

For example, the control device 100 may detect a cut-in of another vehicle in a lane adjacent to the own lane of the vehicle 10. The control device 100 may consider such a cut-in situation as an event in which an object is close to the vehicle 10 within a predetermined distance. For example, the control device 100 may detect an object close to the vehicle 10 within a predetermined distance through a sensor unit 150 such as a radar, a camera, or a LiDAR (e.g., rear-side radar hit, forward-camera bounding box at close proximity, or LIDAR cluster within a near-range zone, etc.).

However, the present disclosure is not limited thereto, and when the control device 100 detects an approaching pedestrian or a fixed obstacle or a moving object located within a predetermined distance, the control device 100 may process the situation as an event in which an object is close to the vehicle within the predetermined distance (e.g., parked vehicle door opening, construction barrier, or crossing cyclist, etc.).

When the control device 100 detects an event in which a specific object is close, the control device 100 may check the driver's response time to such a close object event (S630).

For example, for an object suddenly appearing in front of the vehicle, the control device 100 may measure a time taken for the driver to perform the avoidance operation by stepping on the brake pedal or manipulating the steering wheel (e.g., emergency brake press, abrupt steering correction, or hazard-light activation, etc.).

Specifically, after detecting a close object, the control device 100 may determine the brake reaction time taken for the driver to start stepping on the brake pedal to be the reaction time of S630 (e.g., accelerator release to brake transition, accelerator lift-off, or neutral input, etc.).

In addition, after detecting a close object, the control device 100 may determine the steering wheel manipulation reaction time taken for the driver to grip the steering wheel for avoidance of the object to be the reaction time of S630.

In addition, after detecting a close object, the control device 100 may determine the accelerator pedal release time, which is the time taken for the driver to step off the accelerator pedal, to be the reaction time of S630.

The driver's reaction time to a specific object is not limited to the above-described examples and may be confirmed through various methods such as detection of the driver's gaze (e.g., sudden eye saccade toward hazard, rapid head turn, or gaze-fixation shift, etc.).

The control device 100 may check whether the driver's response time to the detected object is greater than or equal to a preset threshold value (S640).

When the measured reaction time is greater than or equal to a preset threshold value (S640: Yes), the control device 100 may limit the driving control by the system (S650). In contrast, when the measured reaction time is less than the preset threshold value (S640: NO), the control device 100 may maintain the existing driving control (S660).

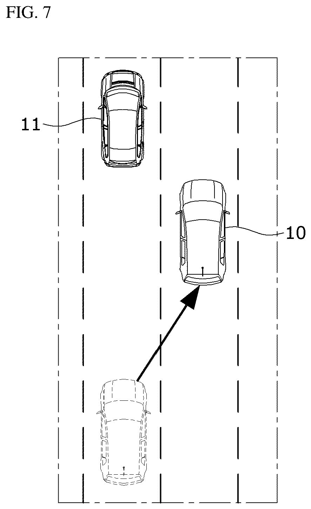

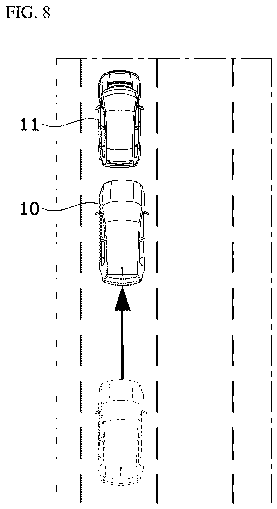

FIG. 7 and FIG. 8 show exemplary diagrams of vehicle operation according to a control state.

In FIG. 7 and FIG. 8, content that the control device 100 controls the driving of the vehicle 10 by the autonomous driving system is disclosed. FIG. 7 illustrates a scenario where the vehicle 10 performs a system-initiated lane change to avoid another vehicle 11 in front of its own lane without any particular limitation.

However, when it is determined that the driver excessively relies on the autonomous driving system by the various examples described above, the control device 100 may limit the autonomous driving of the vehicle 10.

For example, when there is no reaction of the driver or the reaction time is greater than or equal to a threshold value even though an event that requires the driver's reaction of has occurred, the control device 100 may control the vehicle 10 to perform only control of following the other vehicle 11 in front without avoiding the other vehicle, as shown in FIG. 8 (e.g., maintaining lane-center tracking, increasing following distance, or deferring lane-change execution, etc.).

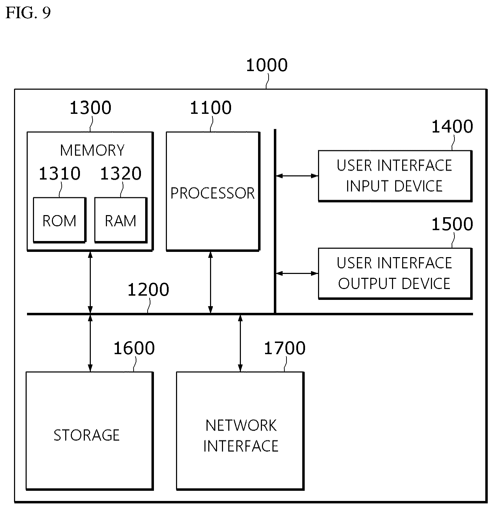

FIG. 9 shows an example computing system (e.g., a computing device of a vehicle or any other apparatus). One or more controllers, processors, etc. described herein, such as one or more components of the vehicle 10, one or more components of the controller device 100, one or more components of another vehicle 11, and any other components and devices disclosed herein, may be implemented by or in the computing system as shown in FIG. 9.

A computing system 1000 may include at least one processor 1100, memory 1300, a user interface input device 1400, a user interface output device 1500, a storage 1600, and a network interface 1700, which are connected with each other via a bus 1200.

The processor 1100 may be a central processing unit (CPU) or a semiconductor device that processes instructions stored in the memory 1300 and/or the storage 1600. Each of the memory 1300 and the storage 1600 may include various types of volatile or nonvolatile storage media. For example, the memory 1300 may include a read-only memory (ROM) and a random-access memory (RAM).

Communication interface(s) (also referred to as communication device(s), communicator(s), communication module(s), communication unit(s), etc.), such as the network interface 1700, may allow software and/or data to be transferred between a device and one or more external devices, and/or between one or more components of a device. Communication interface(s) may include a receiver, a transmitter, a transceiver, a modem, a network interface and/or adapter (such as an Ethernet adapter), a radio transceiver, an antenna, a communication port, a Personal Computer Memory Card International Association (PCMCIA) slot and card, or the like. Software and data transferred via communication interface(s) may be in the form of signals, which may be electronic, electromagnetic, optical, infrared, or other signals capable of being received by communication interface(s). These signals may be provided to communication interface(s) via a communication path of a device, which may be implemented using, for example, wire or cable, fiber optics, a cellular link, a radio frequency (RF) link and/or other communications channels. Communication interface(s) may communicate using one or more communication protocols, such as Ethernet, Wi-Fi, near-field communication (NFC), Infrared Data Association (IrDA), Bluetooth, Bluetooth low energy (BLE), Zigbee, Long-Term Evolution (LTE), 5G New Radio (NR), vehicle-to-everything (V2X), a controller area network (CAN), or a local interconnect network (LIN), etc.

Accordingly, the operations of the method or algorithm described in connection with example example(s) disclosed in the specification may be implemented with a hardware module, a software module, or a combination of the hardware module and the software module, which is executed by the processor 1100. The software module may reside on a storage medium (e.g., the memory 1300 and/or the storage 1600) such as RAM, a flash memory, ROM, an erasable and programmable ROM (EPROM), an electrically EPROM (EEPROM), a register, a hard disk drive, a removable disc, or a compact disc-ROM (CD-ROM).

The storage medium may be coupled to the processor 1100. The processor 1100 may read out information from the storage medium and may write information in the storage medium. Alternatively, the storage medium may be integrated with the processor 1100. The processor and storage medium may be implemented with an application specific integrated circuit (ASIC). The ASIC may be provided in a user terminal. Alternatively, the processor and storage medium may be implemented with separate components in the user terminal.

An autonomous vehicle control device according to an example of the present disclosure comprises: a memory; and a processor electrically or adaptively connected to the memory, wherein the processor is configured to check, when an event that requires a driver's reaction occurs during driving control of a vehicle by a system, the driver's reaction time to the event, determine a driving control state by the system to further increase a headway with a preceding vehicle when the reaction time is greater than or equal to a preset threshold value, and output the determined driving control state through an input/output interface of the vehicle.

In the autonomous vehicle control device according to some examples, the event may include an event in which the driver's non-intervention time for the driving control exceeds a predetermined time, and a driver confirmation request is output.

In the autonomous vehicle control device according to some examples, the event may include an event in which driving control time of the vehicle exceeds a preset time and a driver confirmation request is output.

In the autonomous vehicle control device according to some examples, the event may include an event in which execution of a specific function in the driving control is required, and a driver confirmation request is output.

In the autonomous vehicle control device according to some examples, the event may include an event in which an object is close to the vehicle within a predetermined distance.

In the autonomous vehicle control device according to some examples, the processor may be further configured to maintain driving control by the system when the reaction time is less than the threshold value.

In the autonomous vehicle control device according to some examples, the processor may be further configured to limit at least some functions of driving control by the system when the reaction time is greater than or equal to a preset threshold value.

In the autonomous vehicle control device according to some examples, the processor may be further configured to compare the reaction time with the driver's past driving data to determine the driving control state.

In the autonomous vehicle control device according to some examples, the limitation of the driving control may include requesting driver confirmation when a function generated in the driving control is activated.

In the autonomous vehicle control device according to some examples, the processor may be further configured to output a notification when the reaction time is greater than or equal to the threshold value.

A method of controlling an autonomous vehicle according to an example of the present disclosure comprises: detecting, during driving control of the vehicle by a system, occurrence of an event that requires a driver's reaction; checking the driver's reaction time to the event; determining a driving control state by the system to further increase a headway with a preceding vehicle by the system when the reaction time is greater than or equal to a preset threshold value; and outputting the determined driving control state.

In the method of controlling an autonomous vehicle according to some examples, the event may include an event in which the driver's non-intervention time for the driving control exceeds a predetermined time, and a driver confirmation request is output.

In the method of controlling an autonomous vehicle according to some examples, the event may include an event in which driving control time of the vehicle exceeds a preset time and a driver confirmation request is output.

In the method of controlling an autonomous vehicle according to some examples, the event may include an event in which execution of a specific function in the driving control is required, and a driver confirmation request is output.

In the method of controlling an autonomous vehicle according to some examples, the event may include an event in which an object is close to the vehicle within a predetermined distance.

In the method of controlling an autonomous vehicle according to some examples, the determining a driving control state by the system based on the reaction time may include maintaining driving control by the system when the reaction time is less than the preset threshold value.

In the method of controlling an autonomous vehicle according to some examples, the determining a driving control state by the system based on the reaction time may include limiting at least some functions of driving control by the system when the reaction time is greater than or equal to a preset threshold value.

In the method of controlling an autonomous vehicle according to some examples, the determining of the driving control state may be based on comparing the reaction time with the driver's past driving data.

In the method of controlling an autonomous vehicle according to some examples, the limiting driving control by the system may include requesting driver confirmation when a function generated in the driving control is activated.

In the method of controlling an autonomous vehicle according to some examples, the method may further comprise outputting a notification when the reaction time is greater than or equal to the threshold value.

According to the above-described examples, by adjusting the driving control state of the vehicle according to the driver's state and reaction time, the driver's excessive reliance on autonomous driving functions can be prevented.

While the present disclosure has been described with reference to preferred examples, it will be understood by those skilled in the art that various modifications and changes may be made to the present disclosure without departing from the spirit and scope of the disclosure as set forth in the appended claims.

## Claims

1. An apparatus of a vehicle, the apparatus comprising:
a processor; and
a memory storing at least one instruction that, when executed by the processor, is configured to cause the apparatus to:
determine a reaction time of a driver of the vehicle to an event that requires a reaction of the driver during autonomous driving control of the vehicle,
based on the reaction time being greater than or equal to a threshold value, select a driving control state configured to increase a distance between the vehicle and a preceding vehicle,
output, via an output interface of the vehicle, a signal indicating the selected driving control state, and
adjust, based on the selected driving control state, the autonomous driving control of the vehicle.

2. The apparatus of claim 1, wherein the event comprises a condition in which a non-intervention time interval of the driver during the autonomous driving control exceeds a predetermined time interval, and wherein the at least one instruction, when executed by the processor, is configured to cause the apparatus to output, based on the condition, a driver confirmation request.

3. The apparatus of claim 1, wherein the event comprises a condition in which a duration of the autonomous driving control exceeds a preset time, and wherein the at least one instruction, when executed by the processor, is configured to cause the apparatus to output, based on the condition, a driver confirmation request.

4. The apparatus of claim 1, wherein the event comprises a condition in which execution of a specific function associated with the autonomous driving control is to be performed, and wherein the at least one instruction, when executed by the processor, is configured to cause the apparatus to output, based on the condition, a driver confirmation request.

5. The apparatus of claim 1, wherein the event comprises a condition in which an object is within a predetermined distance from the vehicle, and
wherein the threshold value is adjusted based on at least one of:
a fatigue level of the driver,
a gaze direction of the driver, or
a steering-wheel gripping state of the driver.

6. The apparatus of claim 1, wherein the at least one instruction, when executed by the processor, is configured to cause the apparatus to maintain, based on the reaction time being less than the threshold value, the autonomous driving control.

7. The apparatus of claim 1, wherein the at least one instruction, when executed by the processor, is configured to cause the apparatus to limit, based on the reaction time being greater than or equal to the threshold value, at least one function associated with the autonomous driving control.

8. The apparatus of claim 7, wherein the limiting of the at least one function comprises requesting driver confirmation before the at least one function is executed.

9. The apparatus of claim 1, wherein the at least one instruction, when executed by the processor, is configured to cause the apparatus to:
compare the reaction time with a threshold value derived from past driving data of the driver, and
determine, based on the comparison, the driving control state.

10. The apparatus of claim 1, wherein the at least one instruction, when executed by the processor, is configured to cause the apparatus to output, based on the reaction time being greater than or equal to the threshold value, a notification to the driver via a user interface.

11. A method performed by an apparatus of a vehicle, the method comprising:
detecting, during autonomous driving control of the vehicle, occurrence of an event that requires a reaction of a driver of the vehicle;
determining a reaction time of the driver to the event;
based on the reaction time being greater than or equal to a threshold value, selecting a driving control state configured to increase a distance between the vehicle and a preceding vehicle;
outputting a signal indicating the selected driving control state; and
adjusting, based on the selected driving control state, the autonomous driving control of the vehicle.

12. The method of claim 11, wherein the event comprises a condition in which a non-intervention time interval of the driver during the autonomous driving control exceeds a predetermined time interval, and wherein the method further comprises outputting, based on the condition, a driver confirmation request.

13. The method of claim 11, wherein the event comprises a condition in which a duration of the autonomous driving control exceeds a preset time, and wherein the method further comprises outputting, based on the condition, a driver confirmation request.

14. The method of claim 11, wherein the event comprises a condition in which execution of a specific function associated with the autonomous driving control is to be performed, and wherein the method further comprises outputting, based on the condition, a driver confirmation request.

15. The method of claim 11, wherein the event comprises a condition in which an object is within a predetermined distance from the vehicle, and
wherein the threshold value is adjusted based on at least one of:
a fatigue level of the driver,
a gaze direction of the driver, or
a steering-wheel gripping state of the driver.

16. The method of claim 11, wherein the selecting of the driving control state comprises maintaining, based on the reaction time being less than the threshold value, the autonomous driving control.

17. A vehicle comprising:
a sensor configured to detect at least one of:
a driver state associated with the vehicle, and
an event that requires a reaction of a driver of the vehicle and is associated with autonomous driving of the vehicle; and
a processor circuit configured to cause the vehicle to:
obtain, via the sensor, event information indicating occurrence of the event and driver-state information about the driver state,
estimate a reaction time of the driver to the event,
compare the reaction time with a threshold value, wherein the threshold value varies based on the driver-state information,
output, based on the reaction time being greater than or equal to the threshold value, a driving control signal, wherein the driving control signal is configured to cause at least one of:
increasing a distance between the vehicle and a preceding vehicle, or
limiting execution of at least one autonomous-driving function of the vehicle.

18. The vehicle of claim 17, wherein the processor circuit is configured to vary the threshold value based on the driver-state information, wherein the driver-state information comprises at least one of:
a fatigue level of the driver,
a gaze direction of the driver, or
a steering-wheel gripping state of the driver.

19. The vehicle of claim 17, wherein the processor circuit is configured to output, based on the reaction time being greater than or equal to the threshold value, a request for driver confirmation before execution of the at least one autonomous-driving function.

20. The vehicle of claim 17, wherein the processor circuit is configured to:
determine a non-intervention time interval of the driver during autonomous driving of the vehicle, and
output, based on the non-intervention time interval exceeding a predetermined time interval, a driver-confirmation request.
